# EUROPÄISCHE PATENTSCHRIFT

(11) **EP 1 826 179 B1**
(45) Veröffentlichungstag und Bekanntmachung des Hinweises auf die Patenterteilung: **10.06.2009**
(21) Anmeldenummer: 06000551.9
(22) Anmeldetag: 12.01.2006
(51) Int. Cl.: C01D 3/14

(54) **Verfahren zur Behandlung von Salzsole**
Method for the treatment of brine
Méthode de traitement de la saumure

(43) Veröffentlichungstag der Anmeldung: 29.08.2007
(73) Patentinhaber: Esco-european salt company GmbH & Co.KG, 30159 Hannover (DE)
(72) Erfinder: Köpp, Thorsten, 30177 Hannover (DE); Barge, Heinz-Jürgen, Dr., 8926 LA Leeuwarden (NL)
(74) Vertreter: Filbry, Eberhard

(56) Entgegenhaltungen:
- DE-A1- 19 932 955
- US-A- 4 556 463
- US-A- 5 254 257

## Beschreibung

Die vorliegende Erfindung betrifft ein Verfahren zur Reinigung von Salzsole. Aus dieser behandelten Salzsole kann durch Kristallisation ein bezüglich der Verunreinigungen Bromid, Sulfat, Feinstpartikeln, Keimen, Endotoxinen und zweiwertigen Kationen hochreines Natriumchlorid erhalten werden. Dieses Natriumchlorid (Siedesalz) ist insbesondere für den Einsatz in der Elektrolyse oder als Pharmasalz geeignet.

Bromarmes Siedesalz wird von Kunden der Chlor-Alkali-Elektrolyse verstärkt nachgefragt, weil das ansonsten im Natriumchlorid mit einkristallisierte Bromid bei der Elektrolyse des Salzes in den Chlorstrom gelangt. Ein bromhaltiges Chlorgasprodukt verursacht Qualitätsprobleme.

Beim Natriumchlorid für pharmazeutische Anwendungen gibt es landesspezifische, gesetzliche Grenzwerte insbesondere für Sulfat, Bromid und Pyrogene. Traditionell hergestelltes Siedesalz entspricht häufig nicht allen Anforderungen. Zur Einhaltung des Sulfatgehaltes sind mitunter nennenswerte Waschwassermengen in Reinwasserqualität nötig. Bromid lässt sich nach der Kristallisation nicht mehr mindern. Das für die Soleherstellung eingesetzte Wasser ist selten Trinkwasser, meistens jedoch Oberflächenwasser. Keimeintrag in die Rohsole ist denkbar und es fehlt im Standardsalinenprozess an einer eindeutigen Sperre gegen Keime.

In der Literatur sind zahlreiche Verfahren zur Reinigung von Salzsole beschrieben. Bezüglich der Entfernung von Sulfat- und Carbonatsalzen werden Oxidations-, Kälkungs- und chemische Reinigungsverfahren unterschieden. Die Reinigung der Sole erfolgt oft mit dem Ziel, die aus der Sole hergestellten Produkte wie Siedesalz, Natronlauge oder Soda in hoher Reinheit zu gewinnen. Weiterhin sollen Ablagerungen von schwerlöslichen Salzen z.B. der Erdalkalimetalle verhindert werden, da diese die Leistung und Standzeit der Anlagenteile vermindern. Notwendigerweise aus dem Prozess auszuschleusende Solemengen sollen häufig aus wirtschaftlichen oder ökologischen Gründen verringert werden.

Bei der Oxidationsmethode erfolgt eine intensive Belüftung der Sole, Eisen und Mangan fallen als schwer lösliche Hydroxide aus, Calcium und Magnesium als Carbonate.

Bei der Kälkungsmethode wird Kalkmilch der auf etwa 80°C erwärmten Sole zugegeben, wobei sich Calciumsulfatsalze und Magnesiumhydroxid abscheiden.

Bekannt ist die Kalksodareinigung. Dieser etablierte Prozess, auch Schweizerhalle-Verfahren genannt, wird zum Beispiel in der österreichischen Patentschrift 7198 und in dem deutschen Patent 140605 beschrieben. Dabei wird in der ersten Stufe mittels Calciumhydroxid, das als Lösch- oder Branntkalk in die Lösung eingebracht werden kann, Magnesium nahezu vollständig als Magnesiumhydroxid ausgefällt. In der Lösung befindliche Sulfationen werden gleichzeitig zu einem gewissen Anteil als schwer lösliches Calciumsulfat gefällt, so dass eine Minderung des Calciumgehaltes der Lösung erfolgt. Dabei findet effektiv auch die Bildung von Natronlauge statt, weil Calcium- und Sulfationen als Gips ausfallen, und Natrium- und Hydroxidionen in der Lösung verbleiben. Der pH-Wert der Lösung steigt also an. In der zweiten Stufe des Schweizer-Halle-Verfahrens kommt Soda (Natriumcarbonat) zum Einsatz, um die verbliebenen Calciumionen nahezu vollständig als Calciumcarbonat auszufällen. Die Nebenbestandteile der Sole Bromid und Kalium passieren die Solereinigung ohne Abtrennungseffekt. Die Reduzierung von Sulfat ist begrenzt, denn sie beruht auf der Bildung von Calciumsulfat, das noch eine nennenswerte Löslichkeit in Salzsole besitzt.

Das Einblasen von Kohlendioxid als Rauchgas in der zweiten Stufe des Schweizerhalle-Verfahrens ist eine übliche Methode, um Soda einsparen zu können. Natronlauge, die sich aus Natriumsulfat und Kalk in der ersten Stufe gebildet hat, wird auf diese Weise in der zweiten Stufe in Soda verwandelt. Ausgefällte Verunreinigungen können nach jeder Stufe durch Dekantation bzw. Filtration von der klaren, gereinigten Sole abgetrennt werden. Flockungshilfsmittel verbessern dabei den Klärungsprozess.

In der Literatur gibt es zahlreiche Abhandlungen zur Eindampfung gereinigter Sole, d.h. dem Verdampfen von Wasser aus der Sole mit dem Ziel, Salzkristalle zu gewinnen [z.B. ULLMANN'S ENCYCLOPEDIA OF INDUSTRIAL CHEMISTRY, Release 2005, 7th Edition,"Sodium Chloride"].
Die Eindampfung wird üblicherweise in mehrstufigen Verdampfungsanlagen durchgeführt. Die bei diesem Prozess zurückbleibende Mutterlauge hat sich durch die Auskristallisation von chemisch sehr reinem Natriumchlorid und dem Ausdampfen von Wasser gegenüber der gereinigten Sole mit Nebenbestandteilen angereichert. Dazu zählen insbesondere Sulfat, Bromid und Kalium. Würde man die Mutterlauge komplett verwerfen, hätte dies den Verlust von NaCl zur Folge und es würde eine nennenswerte Menge stark salzhaltigen Abwassers anfallen. Eine teilweise Rückführung der Mutterlauge in die Solereinigung ist deshalb der übliche Weg. Ein wirtschaftlich gewichtiger Grund hierfür ist die Möglichkeit dadurch Soda einsparen zu können. Der hohe Sulfatgehalt der Mutterlauge fördert in der ersten Stufe des Schweizerhalle-Verfahrens die Bildung von Calciumsulfat, so dass eine Lösung mit verringertem Calciumgehalt in die zweite Stufe gelangt. Auf diese Weise wird in der zweiten Stufe Soda eingespart, denn dort wird stets nur die Restmenge an Calcium mittels Soda gefällt. Weiterhin erhöht sich durch die Rück-führung von Natriumsulfat die aus Calciumhydroxid gebildete Menge an Natronlauge in der ersten Stufe. Diese Natronlauge kann durch Rauchgaseinblasung in der zweiten Stufe zusätzlich in Soda umgesetzt werden. Der Effekt der Rauchgaseinblasung steigt also bei Mutterlaugenrückführung. Wird Mutterlauge als Fällungsmittel zurückgeführt, so gelangen Nebenbestandteile wie Bromid und Kalium ebenfalls in hohen Konzen-trationen in die gereinigte Sole. Die Reinsole ist dann reicher an z.B. Bromid und Kalium als dies ohne Mutterlaugeneinsatz der Fall wäre. Die aus dieser Sole herge-stellten Produkte wie Siedesalz weisen dann ebenfalls höhere Anteile dieser Nebenbestandteile auf, was nicht erwünscht ist.

Die Herstellung eines besonders bromidarmen Siedesalzes erfolgt üblicherweise in mehrstufigen Eindampfanlagen. Weil Bromid bei der Kristallisation bevorzugt in der Lösung verbleibt, kann das bromidärmere Salz der ersten Stufen als separates Produkt vertrieben werden wie z.B. in [Akzo,P. Jongema, Production of Low Bromine-Containing Evaporated Salt, 7th Symposium on Salt, Vol.ll 159-163 (1993)] beschrieben. Die an Bromid angereicherte Lösung wird dabei zur jeweils nächst kälteren Stufe weitergeleitet. Im Falle einer Mutterlaugenrückführung liegt ein Konflikt zwischen sparsamer Verwendung von zugekauften Fällungsmitteln wie Soda und einer hohen Qualität der gereinigten Sole bezüglich Bromid und Kalium vor.

Um eine Sole mit hohem Reinheitsgrad dennoch bei sparsamem Einsatz zugekaufter Fällungsmittel herstellen zu können, wird in einigen Veröffentlichungen die Abtrennung der Sulfationen aus der Salzsole und insbesondere aus Mutterlauge vorgeschlagen. Dabei werden insbesondere lonenaustauscher zur Abtrennung von Sulfationen beschrieben (JP 04321514-A, JP 04338110-A, JP 04334553-A, US 4556463). Die in diesen Druckschriften beschriebenen lonenaustauscherverfahren zur weitestgehenden Reduktion der Sulfationenkonzentration haben sich jedoch in der Praxis nicht etabliert, da aufwendige Regenerationsverfahren nötig sind, die zudem größere Mengen verdünnter Salzlösungen erzeugen, deren Verwendung bzw. Entsorgung ökologische Probleme aufwirft. Die meistens diskontinuierliche Betriebsweise der teuren Anlagen ist ein weiterer Nachteil für die Anwendung in großen, kontinuierlich betriebenen industriellen Prozessen.

In EP 0492727 wird beschrieben, dass durch die Kristallisation eines Natriumsulfat-Natriumchlorid-Gemenges aus der Mutterlauge eine Verbesserung gegenüber der direkten Mutterlaugenrückführung darstellbar ist. Dabei wird ein Kristallisat erzeugt, das an Natriumsulfat angereichert, aber noch immer mit großen Anteilen Natriumchlorid vermischt ist. Das Kristallgemisch soll anstelle der Mutterlauge in die Solereinigung zurückgeführt werden. Je nach Sättigungsverhältnissen der Rohsole kann eine Verdünnung mit Wasser nötig werden. Der Aufwand bezüglich der Investitionen und der Betriebskosten eines solchen Kristallers ist hoch. Es wird vorgeschlagen, mitkristallisiertes NaCl als Produkt abzutrennen, indem man das Natriumsulfat selektiv in Sole auflöst. Erfahrungsgemäß wird ein solches NaCl unakzeptabel hohe Gehalte an Natriumsulfat aufweisen, da bei der Kristallisation Verwachsungen der beiden Kristallarten auftreten werden. Der im Salzgemisch erhaltene NaCl-Anteil ist zudem reich an Bromid, so dass im Falle der Rückführung in die Solereinigung ähnlich wie bei der Mutterlauge ungewollt Bromid zurückgeführt wird.

Die CH 454796 und die GB 1139625 offenbaren die Kristallisation von Natriumsulfat und Natriumchlorid bei zwei Temperaturniveaus in zwei getrennten Kristallern, die durch "pendelnden" Lösungsaustausch kommunizieren ("Pendelverfahren"). Die beiden Salze kristallisieren dann separat. Dabei soll es gelingen, das Natriumsulfat als nahezu reines Kristallisat zu gewinnen und als solches in die Solereinigung zurückzuführen. Das Problem des hohen Investitions- und Betriebsaufwandes bleibt aber erhalten und Regelungsprobleme kommen hinzu. Bei der Kristallisation des reinen Natriumsulfates ist Bromid im wesentlichen nur noch in der anhaftenden Mutterlauge der schleuderfeuchten Kristalle enthalten. Diese Mutterlauge kann durch frische Sole abgewaschen und damit verdrängt werden, wodurch ein bromidarmes NaCl-Kristallisat hergestellt werden kann. Vorteil dieses Pendelverfahrens ist die nahezu komplette Trennung des Sulfats von Bromid- und Kaliumverunreinigungen.

Weiterhin ist bekannt, zur Trennung von Sulfat- und Chloridionen Membrantrennmethoden wie die Nanofiltration einzusetzen. Eine solche Nanofiltration von Salzsolen mit dem Ziel der Sulfatabtrennung wird zum Beispiel in den Druckschriften US 5858240, US 5587083, EP 0821615 B1 beschrieben. Durch dieses Trennverfahren wird die eingespeiste, Sulfat enthaltende Salzsole in ein an Sulfat angereichertes Konzentrat (Retentat) sowie ein sulfatarmes Permeat getrennt, wobei durch den stattfindenden Ladungsausgleich die Natriumionen im richtigen Verhältnis zu Sulfat- bzw. Chloridionen in den beiden Trennfaktionen vorliegen. Nach den genannten Druckschriften wird die als Konzentrat auftretende sulfatreiche Faktion nicht verwertet. Ziel ist die Minderung eines weiterhin vorhandenen Abstoßstromes eines Herstellprozesses. Als Herstellprozess werden die Chlor-Alkali-Elektrolyse, die Natriumhypochloriderzeugung und die Natriumchloratherstellung erwähnt.

Einen Weg zur Anreicherung von Natriumsulfat aus einer Mutterlauge der Siedesalzherstellung in einem mehrstufigen Verdampfungsprozess offenbart die EP 1202931 B1. Bei dem beschriebenen Verfahren wird eine Nanofiltration der Mutterlauge durchgeführt, um u.a. das gewonnene Konzentrat (Retentat) mit einer verminderten Bromidfracht in die Solereinigung zurückführen zu können. Das Verfahren des Standes der Technik beinhaltet folgende Verfahrensschritte:
a) Abscheidung zweiwertiger Kationen durch einen oder mehrere Fällungsschritte aus der Salzsole
b) Ein- oder Mehrstufenverdampfung der nach (a) vorbehandelten Salzsole
c) Auftrennung der bei (b) auftretenden Mutterlauge in ein Konzentrat und ein Permeat durch Nanofiltration
d) Rückführung des Konzentrats als Fällungsreagens bei (a)

Weil die Nanofiltrationsmodule nur unterhalb der Sättigung betrieben werden können, ist für die Abtrennung des Bromides vom Sulfat eine Begrenzung vorhanden. Als Feed der Nanofiltration wird gemäß EP 1202931 die Mutterlauge der vorletzten Stufe verwendet, die noch nicht bezüglich Natriumsulfat gesättigt ist. Zur Verdünnung wird Sole oder Wasser verwendet. Diese verdünnte Mutterlauge wird bis an die Natriumsulfatsättigung konzentriert und das Konzentrat zurückgeführt. Das sulfatarme Permeat wird in der letzten Verdampferstufe weiter eingedampft bis die Sättigung an Kaliumsalzen erreicht wird, diese Restlösung wird verworfen.

Bei dem beschriebenen Einsatz der Nanofiltration wird eine konzentrierte Sole mit z.B. 50% der Sättigungskonzentration an Natriumsulfat als Feed gewählt. Diese Sole kann maximal auf die Hälfte aufkonzentriert werden, bis Natriumsulfatsättigung eintreten würde. Dabei halbiert man auch die Fracht an Bromid, denn nur noch 50% der Lösungsmenge enthalten bei gleicher Bromidkonzentration auch nur die Hälfte an Bromid als Masse gerechnet. Eine gewisse zusätzliche Verringerung der Bromidfracht ergibt sich über negative Rückhaltekoeffizienten des Bromids in den konzentrierten Lösungen, d.h. Bromid wird quasi durch die Membran Richtung Permeat gedrückt, im Konzentrat ist also auch die Bromidkonzentration geringer als im Feed. Die nahezu perfekte Trennung wie beim Pendelverfahren ist mit diesem Verfahren aber nicht erreichbar.

An die der Nanofiltration aufgegebene Lösung, dem sogenannten Feed, müssen enge Anforderungen gestellt werden, damit die Membranen keinen Schaden nehmen. Dazu gehört eine Temperatur von <40°C bei Standardbauweise, ein nicht zu hoher pH-Wert, ein geringer Anteil an feinsten Partikeln und eine leichte Untersättigung der Lösung, damit sich auf der Membrane keine Kristalle bilden können. Diese Anforderungen sind bei der Nanofiltration einer Mutterlauge nur mit hohem Aufwand sicherzustellen, denn die Mutterlauge ist bezüglich NaCl vollständig gesättigt, meistens wärmer als erwünscht, mit kleinen Salzpartikeln behaftet und hat aufgrund der konzentrierenden Verdampfung einen deutlich höheren pH-Wert als die gereinigte Sole. Die Sättigung ist Grund für die Vermischung der Mutterlauge mit Sole oder Wasser zur Verdünnung. Eine solche Verdünnung erhöht den zu filtrierenden Volumenstrom. Insbesondere die Verwendung von Wasser ist energetisch kontraproduktiv, da es später wieder ausgedampft werden muss.

Eine vollständige Trennung des Bromides vom Sulfat ist mittels Nanofiltration der Mutterlauge nicht möglich. Dieser Ansatz ist deshalb grundsätzlich benachteiligt gegenüber dem der Kristallisation von reinem Natriumsulfat beim "Pendelverfahren". Technische Probleme mit der Beständigkeit der Membran gegen die Mutterlauge sind zudem zu erwarten, wenn keine umfangreichen Schutzmaßnahmen erfolgen.

Aufgabe der vorliegenden Erfindung ist es, die bei der chemischen Rohsolereinigung eingesetzte Fällungsmittelmenge an Soda so weit wie möglich zu reduzieren, ohne dabei den Bromidgehalt der gereinigten Sole gegenüber dem der Rohsole zu erhöhen. Dabei soll zudem eine starke Reduzierung des Sulfatgehaltes der Reinsole gegenüber der Rohsole erreicht werden. Eine Reinigung der Rohsole von Keimen und Endotoxinen zur Erzeugung einer pyrogenfreien Reinsole ist eine weitere Aufgabe der Erfindung. Die auf diese Weise erzeugte Reinsole soll geeignet sein, daraus ein sulfatarmes und pyrogenfreies Natriumchlorid und zudem eine möglichst große Fraktion an bromidarmem NaCl durch eine konventionelle Mehrstufenverdampfung zu kristallisieren. Dabei sollen bezüglich der spezifischen Fällungsmittelverbräuche und der Reinsolequalität vergleichbare Ergebnisse wie beim Pendelverfahren erreicht werden. Diese Aufgaben werden durch das Verfahren nach Anspruch 1 gelöst.

Es wurde gefunden, dass durch die Nanofiltration der Sole direkt nach einer 2-stufigen chemischen Solereinigung nach dem Schweizerhalle-Verfahren mit Rückführung des Konzentrats in die erste Stufe dieser Solereinigung und der Nutzung des Permeats als Reinsole eine deutliche Verbesserung gegenüber dem Stand der Technik eintritt. Es wurde weiterhin gefunden, dass die Wirtschaftlichkeit eines solchen Verfahrens auch in Konkurrenz zum "Pendelverfahren" gegeben ist und dass mit marktgängigen Standardbauelementen die Konstruktion einer solchen Nanofiltrationsanlage kosteneffizient möglich ist.

Es wird erfindungsgemäß vorgeschlagen, die Sole nach der zweiten Stufe des Schweizerhalle-Verfahrens einer Nanofiltration zu unterziehen. Diese Sole hat noch keine erhöhten Gehalte an Bromid und Kalium, so dass sich der Nachteil der unvollständigen Sulfatabtrennung nicht negativ auswirken kann. Man führt den sulfatangereicherten Konzentratstrom in die erste Stufe der Solereinigung zurück, um dort vermehrt Calciumsulfat zu fällen und in der zweiten Stufe die gewünschte Sodaeinsparung zu erzielen. Bromid und Kalium in der Lösung bleiben dabei weitgehend konstant. Da die Nanofiltration bei niedrigeren Eintrittskonzentrationen an Sulfat betrieben wird, steigt der Sulfatrückhaltegrad und der Permeatfluß pro Fläche an. Der pH-Wert der gereinigten Sole liegt niedriger als nach der Eindampfung, die Sole ist bezüglich NaCl untersättigt, frisch geklärt und muss nicht gekühlt, sondern allenfalls erwärmt werden, um eine günstige Betriebstemperatur von ca. 35 °C zu erreichen. Beim Erwärmen der Lösung kann keine Kristallbildung auftreten. Dadurch werden günstige Vorraussetzungen für einen schonenden Betrieb der Nanofiltrationsmembranen mit langen Standzeiten geschaffen. Als Membranen können im Prinzip alle handelsüblichen Nanofiltrationsmembranen verwendet werden, deren zulässige Betriebsparameter den gewünschten Einsatzbereich einschließen. Die wirtschaftlich optimale Membran ist durch Langzeitversuche in einer Pilotanlage zu ermitteln, die Standzeit ist dabei ein ökonomisch wichtiger Faktor. Es liegt keine feste Bindung der Erfindung an eine bestimme Membrantype vor.

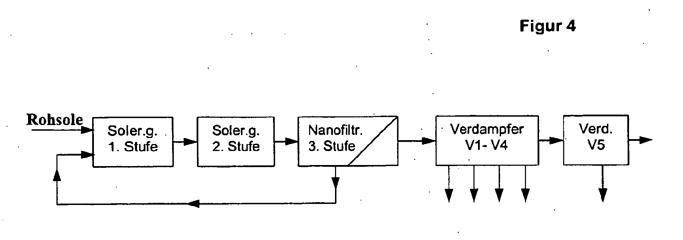

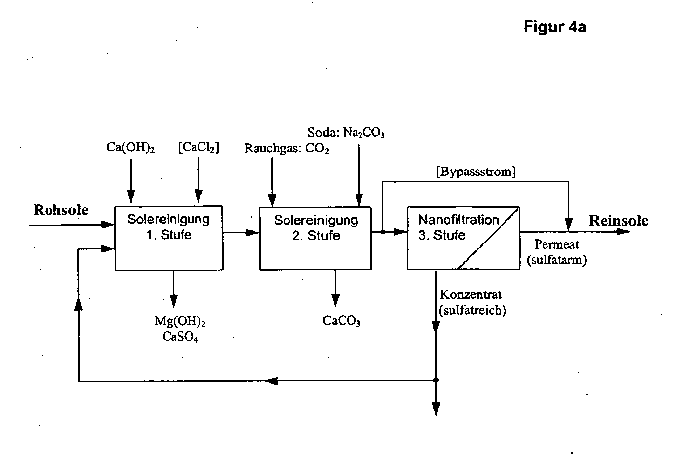

Im Falle einer Rohsolezusammensetzung mit hohem stöchiometrischen Überschuss von Sulfat zu Calcium, einer guten Entwässerung des Schlamms aus den chemischen Reinigungsstufen z.B. durch Filterpressen und einem hohen Membranrückhaltekoeffizienten der Nanofiltrationsstufe kann das rückgeführte Sulfat sich im Kreislauf so weit anreichern, dass die Sättigungsgrenzen für Natriumsulfat in der Nanofiltration erreicht wird bzw. dass eine weitere Rückführung keine Erhöhung der Sodaeinsparung mehr ergibt. In diesem Fall muss wie in Figur 4a dargestellt ein zusätzlicher, kontrollierter Abstoß von Sulfat aus dem Kreislauf ermöglicht werden. Hierzu sind u.a. folgende Wege möglich: Verwendung einer Nanofiltrationsmembran mit geringerem Sulfatrückhalt, Bypassstrom an der Membran vorbei, Abstoß eines Teils des Konzentrats, Erhöhung der Restfeuchte in der Schlammentwässerung, Zugabe von Caliumchlorid in der ersten Solereinigungstufe zur Fällung überschüssigen Sulfates als Calciumsulfat.

Die Nanofiltration wird auf die beschriebene Weise integraler Bestandteil der Solereinigungsanlage und stellt dort die dritte Reinigungsstufe dar. Der Solereinigungsprozess kann unabhängig und örtlich getrennt vom Abnehmer der Sole betrieben werden. Abnehmer der gereinigten Sole kann beispielsweise eine Saline, eine Elektrolyse oder eine Sodafabrik sein. In einigen Salinen ist der Solereinigungsprozess in der Nähe des Solfeldes installiert, um die anfallenden Solereinigungsschlämme in Altkavernen verbringen zu können. Eine einzige Leitung für gereinigte Sole verbindet dann die Solereinigung mit der Saline. Die Saline entsorgt am Ende des Prozesses eine gewisse Solemenge z.B. in einen Fluss oder ins Meer. Eine Rückführung von Mutterlauge in die Solereinigung wäre nur durch den Bau einer zweiten Pipeline zur Solereinigungsanlage möglich. Bei dem erfindungsgemäßen Verfahren ist die Nanofiltration aber Bestandteil der Solereinigungsanlage, eine Rückführungsleitung für Mutterlauge entfällt. Damit wird auch eine Verbesserung für solche Solereinigungen möglich, die für mehrere Kunden arbeiten und bei denen der Folgeprozess keine Saline darstellt, wo aber trotzdem eine Reduzierung des Sodaverbrauches und zudem eine Absenkung des Sulfatgehaltes der Sole zum Kunden erwünscht ist.

Bevorzugt sind für die Nanofiltrationsstufe solche Verfahren, bei denen der Membranrückhaltekoeffizient R des Nanofiltrationsschrittes für Sulfationen >90%, besser >95% beträgt. Der Koeffizient variiert u.a. mit dem Druck und der Sulfationenkonzentration. Der Membranrückhaltekoeffizient für Chloridionen soll bevorzugt zwischen 0-5% liegen.

Das sulfatarme Permeat der Nanofiltration, also die Sole nach der dritten Solereinigungsstufe ist als Reinsole Produkt des erfindungsgemäßen Solereinigungsprozesses. Diese Reinsole kann Eingangsstrom für einen konventionellen mehrstufigen Verdampfungsprozess sein. Das kristallisierende Salz wird in den ersten Stufen einen gewünscht niedrigen Bromidgehalt aufweisen, zusätzlich aber auch in allen Kristallerstufen einen untypisch niedrigen Sulfatgehalt. Es wird demzufolge erst gar kein Sulfat in die Verdampfungskristallisation eingeführt, sondern bereits vorab aus der Lösung abgeführt. Der Sulfatgehalt des Salzes wird dadurch sogar bei Verzicht auf Waschwasser auf den Schleudern sehr niedrige Werte annehmen. Dies ist eine klare Verbesserung gegenüber dem Stand der Technik. Eine Mutterlaugenrückführung wird überflüssig, weil die sulfatarme Sole zu einem stärkeren Grade eingedampft werden kann als bisher. Es wird kein angereichertes Bromid mehr zurückgeführt. Eine stark verringerte Menge an Mutterlauge in der letzten Stufe wird komplett ausgeführt.

Neben den beschriebenen Eigenschaften des aus der erfindungsgemäß gereinigten Sole kristallisierten Siedesalzes wie niedriger Bromid- und Sulfatgehalt werden auch die Gehalte an zweiwertigen Kationen wie Calcium- und Magnesium im Salz deutlich abgesenkt, denn auch diese Ionen werden von der Nanofiltrationsmembran stark zurückgehalten. Das auf diese Weise hergestellte Siedesalz erfüllt als hochreines, bromarmes Siedesalz auch die strengsten Anforderungen für die Chlor-Alkali-Elektrolyse. Reinigungsschritte innerhalb des Elektrolysekreislaufes können dadurch stark entlastet werden wodurch Kosten eingespart werden können, was dem erfindungsgemäß hergestellten Siedesalz vorteilhafte Marktchancen als extrareinem, bromarmem Siedesalz einräumt.

Beim erfindungsgemäßen Solereinigungsprozess hat vorzugsweise die gesamte Sole die Nanofiltrationsmembran als dritte Stufe passiert. Die Reinsole ist dann ausschließlich Permeat der Nanofiltration. Der Sulfatgehalt des aus dieser Sole kristallisierten Salzes ist stark vermindert. Die Herstellung von bromidarmem Salz wird durch den erfindungsgemäßen Prozess erleichtert, der für Pharmasalz häufig vom Gesetzgeber limitierte Parameter Bromid kann besser eingehalten werden.

Diese Reinsole hat durch die Nanofiltration auch bezüglich großer organischer Moleküle, Keimen oder Endotoxinen eine Filtration erfahren, was bei Verwendung des daraus in einer Saline kristallisierten Salzes als Pharmasalz ein wichtiges Qualitätskennzeichen darstellt. Aufgrund des Rückhaltes der Nanofiltrationsmembran auch für größere organische Verbindungen ist eine Abtrennung schaumbildender Organika die zum Beispiel durch Oberflachenwässer in die Sole gelangen sowie restlicher Flockungshilfsmittel zum Beispiel aus dem Einsatz in den Vorreinigungsstufen nach dem Schweizerhalle-Verfahren möglich. Wegen des Rückhaltes der Nanofiltration für zweiwertige Ionen kann Calciumcarbonat ebenfalls zurückgehalten werden, so dass der Einsatz von Antiscalingmitteln nach der Nanofiltration unterbleiben kann. Auch partikulär eingetragene Verunreinigungen werden durch die Nanofiltration zurückgehalten. Um die Wirksamkeit der Nanofiltration zum Rückhalt der oben erwähnten Verunreinigungen nicht zu beeinträchtigen, muss in diesem Fall auf einen Bypassstrom wie in Figur 4a angedeutet verzichtet werden und bei Bedarf eine andere der weiter oben dargelegten Methoden zur Reduzierung der Sulfatrückführung gewählt werden. Ein Bypass von Sole ist jedoch möglich, wenn das Pharmasalz in einer der ersten Verdampferstufen gewonnen wird und der Bypass in eine der nachfolgenden Stufen eingeleitet wird.

Die vorliegende Erfindung wird anhand der folgenden Beispiele im Vergleich des erfindungsgemäßen Verfahrens mit den Verfahren des Standes der Technik näher erläutert:

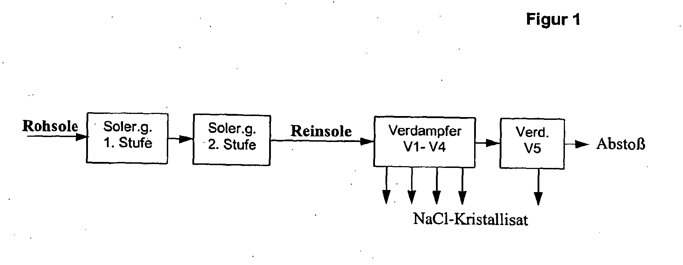

- Figur 1:: zweistufige chemische Solereinigung mit anschließender 5-stufiger Verdampfung ohne Mutterlaugenrückführung

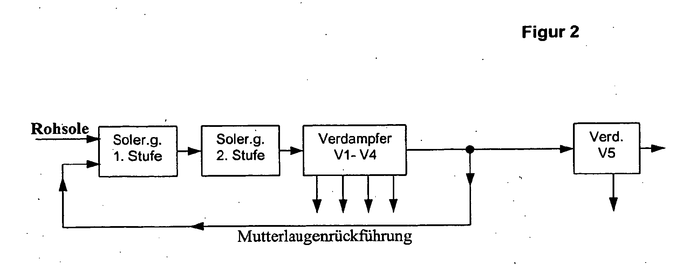

- Figur 2:: zweistufige chemische Solereinigung mit anschließender 4-stufiger Verdampfung, wobei ein Teilstrom an Mutterlauge aus der 4. Verdampferstufe in die Solereinigung zurückgeführt und der Rest an Mutterlauge in einer 5.Verdampferstufe weiter eingedampft wird

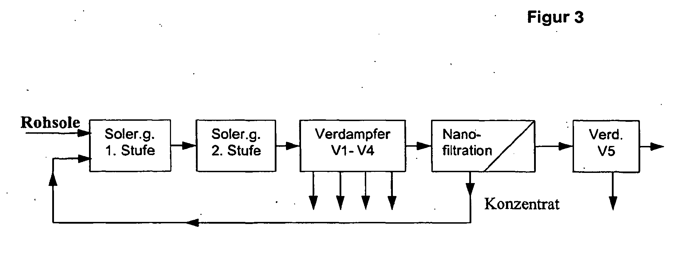

- Figur 3:: zweistufige chemische Solereinigung mit anschließender 4-stufiger Verdampfung, wobei die Mutterlauge aus der 4. Verdampferstufe bis auf einen Bypass von 1,4 t/h nanofiltriert, das Konzentrat in die Solereinigung zurückgeführt und das Permeat in einer 5. Verdampfer-Stufe weiter eingedampft wird (EP 1202931)
- Figur 4:: erfindungsgemäßes Verfahren mit zweistufiger chemischer Solereinigung, anschließender Nanofiltration mit 15,9 t/h Bypass, nachfolgender 5-stufiger Verdampfung der Reinsole und Rückführung des Konzentrats in die zweistufige chemische Solereinigung. Die drei Solereinigungsstufen sind in Figur 4a detailliert dargestellt.

Die zu vergleichenden Verfahren enthalten jeweils eine zweistufige chemische Solereinigung nach Schweizerhalle. Der Kalküberschuss in der ersten Stufe der Solereinigung über den Magnesiumgehalt hinaus beträgt 25 mmol/l Hydroxidionen und er ist wie der verbleibende Hydroxidionengehalt von 2,9 mmol/l nach Stufe 2 in allen Beispielen gleich. Die Rohsole hat in allen Beispielen die folgende chemische Zusammensetzung pro kg Lösung: 253 g/kg NaCl, 3,70 g/kg Sulfat, 0,804 g/kg Calcium, 0,328 g/kg Magnesium, 1,079 g/kg Kalium, 0,070 g/kg Bromid. Die Reinsole wird komplett in die erste Verdampferstufe eingeleitet und der austretende Strom dann in gleicher Weise seriell von Stufe zu Stufe geleitet. Die mehrstufige Verdampfung ist jeweils 5-stufig. Der Wasserverdampf aller fünf seriell geschalteten Verdampferstufen ist dabei als gleich angenommen, insgesamt 69 Gew.% der Rohsole. Gleicher Wasserverdampf pro Stufe entspricht näherungsweise der üblichen seriellen thermischen Verschaltung. Für die Konzentration an Sulfationen am Austritt des letzten Verdampfers bzw. im Konzentrat der Nanofiltration wurde der Maximalwert von 40,8 g Sulfat/kg Lösung eingehalten. Das Mengenverhältnis des Rückführstromes (Mutterlauge bzw. Konzentrat) zum Rohsolestrom im Fall 2 - 4 war mit 27 Gew.% immer gleich. Die Fälle 1 und 2 sind ohne Nanofiltration ausgeführt, die Fälle 3 und 4 mit Nanofiltration. Fall 1 ist als Vergleichsfall für die chemische Qualität der Reinsole und des daraus kristallisierten Siedesalzes zu sehen, denn hier wird keine chemisch mit Nebenelementen angereicherte Sole zurückgeführt. Fall 2 ist als Vergleichsfall für den Sodaverbrauch (100%) zu sehen, denn es ist die konventionell übliche Verschaltung. Fall 3 entspricht dem Patent EP 1 202 931. Nach diesem Patent wird vor der Nanofiltration ein- bis mehrstufig eingedampft, im Vergleichsfall 4-stufig. Nach der Nanofiltration wird das Permeat optional weiter eingedampft, hier einstufig. Fall 4 stellt die Erfindung dar. In den Fällen 2 und 3 erfolgt nach Verdampferstufe 4 ein Schnitt, indem die Mutterlauge zum Teil in die erste Stufe der Solereinigung zurückgeführt wird bzw. indem man die Mutterlauge nanofiltriert und das Konzentrat zurückführt, wodurch die Verdampfer 1-4 in den Rückführkreislauf eingeschlossen werden. Bei den Fällen 1 und 4 sind hingegen Solereinigung und Kristallisation streng getrennt. Die Berechnungen der Beispiele erfolgten in Anlehnung an die im Annex des Patentes EP 1 202 931 aufgeführten Berechnungsformeln, die auf Massenbilanzen basieren, die dem Fachmann allgemein bekannt sind.

**Tabelle 1: Vergleich der 4 Verfahrensvarianten zur Siedesalzherstellung**

| | **Fall 1** | **Fall 2** | **Fall 3** | **Fall 4** | |
|---|---|---|---|---|---|
| relativer Sodaverbrauch | 123% | 100% | 15% | 15% | |
| Verhältnis Bromidgehalt der Reinsole / Rohsole | **1,0** | 1,5 | 1,5 | **1,0** | |
| Verhältnis Sulfatgehalt der Reinsole / Rohsole | 0,8 | 1,1 | 2,5 | **0,18** | |
| Verhältnis Sulfatgehalt vom Abstoß / Rohsole | 11,0 | 9,6 | **2,5** | **2,4** | |
| Abstoßmenge nach Verdampfer 5 / Rohsole | 7,3% | 7,3% | 7,3% | 7,3% | |
| ppm Bromid im Salz des Verdampfers 1 | **13,4** | 19,8 | 19,2 | **13,5** | ppm |
| ppm Bromid im Salz des Verdampfers 5 | 130 | 130 | 130 | 130 | ppm |

Im **Fall 1** wurde keine Mutterlauge zurückgeführt, der Austritt des Verdampfers 5 wurde komplett abgestoßen. Der Abstoßstrom von 7,3% der Rohsolemenge ist bei diesem Fall der kleinste mögliche Abstoßstrom, weil die Sättigungsgrenze für Sulfat im Abstoß des Verdampfers 5 erreicht wird. Diese Abstoßmenge und der damit verbundene Bromidgehalt im Verdampfer 5 wurden als konstant für alle anderen Fälle gesetzt.

Im **Fall 2** wurde von der Mutterlauge nach Verdampfer 4 ein Teilstrom in die Solereinigung zurückgeführt und die Restmenge weiter im Verdampfer 5 eingedampft. Der Bromidgehalt in der Reinsole und damit im Salz des Verdampfers 1 ist deutlich angestiegen, der Sodaverbrauch aber nur mäßig gesunken. Der Sodaverbrauch des Fall 2 wurde als 100% gesetzt. Der Sulfatgehalt des Abstoßes zeigt an, dass noch eine gewisse Verringerung des Abstoßstromes möglich ist, wenn höhere Bromidgehalte im Salz des Verdampfers 5 zulässig sind.

Im **Fall 3** wurde nahezu die gesamte Mutterlauge nach der 4. Verdampferstufe nanofiltriert und das Konzentrat zurückgeführt. Das Permeat wurde in der 5. Verdampferstufe weiter eingedampft. Der Sodaverbrauch sinkt stark auf 15% des Wertes von Fall 2. Der Sulfatgehalt der Reinsole und damit in den Verdampferstufen 1-4 hat sich mehr als verdoppelt, erst in der Verdampferstufe 5 zeigt sich eine Verbesserung gegenüber Fall 2. Die Salzqualitäten verschlechtern sich folglich in den Verdampferstufen 1-4 bezüglich Sulfat und verbessern sich in der Verdampferstufe 5. Die Bromidgehalte im Salz bleiben unverändert. Dabei ist zu beachten, dass die in der Praxis zusätzlich nötige Verdünnung vor der Nanofiltration diesen Vergleich merklich verschlechtern würde. Der Spielraum zur Minderung des Abstoßstromes ist noch deutlich größer als im Fall 2, allerdings wiederum mit dem Effekt eines höheren Bromidgehaltes im Salz des Verdampfers 5.

Der **Fall 4** stellt das erfindungsgemäß neue Verfahren dar, die Sole wurde nach der zweiten chemischen Reinigungsstufe zum größten Teil nanofiltriert und das Konzentrat zurückgeführt. Die Reinsole hat jetzt wie im Fall 1 den gleichen Bromidgehalt wie die Rohsole, der Sulfatgehalt hat zudem einen unübertroffen niedrigen Wert. Es kann die gleiche Salzqualität bezüglich Bromid in den 5 Verdampferstufen dargestellt werden wie im Fall 1. Der Sodaverbrauch hat den gleichen niedrigen Wert wie im Fall 3. Der erfindungsgemäße Fall 4 ist damit in allen Vergleichspunkten am vorteilhaftesten. Auch hier kann wie im Fall 3 der Abstoß reduziert werden, wenn höhere Bromidgehalte im Salz des Verdampfers 5 zulässig sind.

## Patentansprüche

1. Verfahren zur Behandlung von Salzsole durch Fällung zweiwertiger Kationen mit Sulfat- und Hydroxidionen in einer ersten Stufe (a) sowie Fällung restlicher zweiwertiger Kationen mit Carbonationen und unter Rauchgaseinblasung in einer zweiten Stufe (b) sowie unter Anwendung einer Nanofiltration **dadurch gekennzeichnet,**
**dass** die gereinigte Sole aus der zweiten Stufe in einer unmittelbar sich anschließenden dritten Stufe mittels Nanofiltration in ein Konzentrat und ein Permeat getrennt wird, wobei das Permeat Produkt ist in Form gereinigter Sole und das Konzentrat in die erste Stufe (a) zurückgeführt wird.

2. Verfahren nach Anspruch 1 **dadurch gekennzeichnet, dass** das nanofiltrierte Permeat aus (c) eine gegenüber der Rohsole erniedrigte Konzentration an zweiwertigen Ionen, insbesondere Sulfationen, aufweist.

3. Verfahren nach Anspruch 1 **dadurch gekennzeichnet, dass** ein Teilstrom des Konzentrats aus (d) aus dem Prozess ausgeführt wird.

4. Verfahren nach Anspruch 1 **dadurch gekennzeichnet, dass** ein Teilstrom der chemisch gereinigten Sole aus (b) an der Nanofiltration vorbeigeführt wird.

5. Verfahren nach Anspruch 1 **dadurch gekennzeichnet, dass** in (a) zweiwertige Kationen hinzugefügt werden.

6. Verfahren nach Anspruch 1 bis 5 **dadurch gekennzeichnet, dass** die gereinigte Sole aus (c) in einer vorzugsweise mehrstufigen Verdampfungskristallisation zu einem hochreinen bromid- und sulfatarmen sowie pyrogenfreien NaCl-Siedesalz kristallisiert wird.

## Claims

1. Process for the handling of salt brine through precipitation of bivalent cations with sulfate and hydroxide ions in a first stage (a), as well as precipitation of residual bivalent cations with carbonation and with flue gas in-blowing in a second stage (b); as well as with application of nanofiltration, **characterized** such that the cleaned brine from the second stage is separated, in a directly subsequent third stage by means of nanofiltration, into a concentrate and a permeate, where the permeate product is in the form of cleaned brine and the concentrate is taken back to the first stage (a).

2. Process according to Claim 1, identified in that the nano-filtered permeate from (c) indicates a lower concentration of bivalent ions with respect to the raw brine, in particular sulfation.

3. Process according to Claim 1, identified in that a diverted flow of the concentrate from (d) is implemented from the process,

4. Process according to Claim 1, identified in that a diverted flow of the chemically-cleaned brine from (b) is included in the nanofiltration.

5. Process according to Claim 1, identified in that bivalent cations are to be added in (a).

6. Process according to Claim 1, identified in that the cleaned brine from (c) is crystallized, preferably in a multi-stage vaporization crystallization to an ultra-pure, low-bromide and low-sulfate, as well as pyrogenic-free, NaCl boiled salt.

## Revendications

1. Dispositif pour le traitement de saumure par précipitation de cations divalents avec des ions de sulfate et d'hydroxydes dans une première étape (a) ainsi que par précipitation des cations divalents restants avec des ions de carbonate sous insufflation dans une deuxième étape (b) et par l'utilisation de la nanofiltration. Ce dispositif est **caractérisé par le fait que** la saumure purifiée de la deuxième étape est divisée en un concentré et un perméat émanent directement d'une troisième étape par un procédé de nanofiltration, bien que le perméat soit un produit sous forme de saumure purifiée et que le concentré se rapporte à la première étape (a).

2. Dispositif selon la revendication 1 **caractérisé en ce qu'**un perméat nanofiltré provenant de (c) présente une concentration plus faible d'ions divalents par rapport à la saumure brute, en particulier les ions de sulfate.

3. Dispositif selon la revendication 1 **caractérisé en ce qu'**un flux partiel du concentré provenant de (d) est exécuté par ce processus.

4. Dispositif selon la revendication 1 **caractérisé en ce qu'**un flux partiel de la saumure purifiée chimiquement provenant de (b) passe inévitablement par le procédé de nanofiltration.

5. Dispositif selon la revendication 1 **caractérisé en ce que** des cations divalents sont ajoutés en (a).

6. Dispositif selon la revendication 1 à 5 **caractérisé en ce que** la saumure purifiée provenant de (c) est cristallisée par une cristallisation par évaporation à plusieurs niveaux en sel marin très pur, pauvre en sel de sodium et en sulfate mais également exempt de pyrogène.
